# EUROPEAN PATENT SPECIFICATION

(11) **EP 3 452 538 B1**
(45) Date of publication and mention of the grant of the patent: **18.12.2024**
(21) Application number: 17723828.4
(22) Date of filing: 02.05.2017
(51) Int. Cl.: C08J 9/14, C08L 25/04

(54) **Z-HFO-1336MZZ BLOWING AGENT FOR FOAMING THERMOPLASTIC POLYMER COMPRISING POLYSTYRENE**
Z-HFO-1336MZZ-TREIBMITTEL ZUM AUFSCHÄUMEN VON THERMOPLASTISCHEM POLYMER ENTHALTEND POLYSTYROL
AGENT GONFLANT Z-HFO-1336MZZ POUR L'EXPANSION D'UN POLYMÈRE COMPRENANT DU POLYSTYRÈNE

(30) Priority: 06.05.2016 US 201662332616 P
(43) Date of publication of application: 13.03.2019
(73) Proprietor: The Chemours Company FC, LLC, Wilmington, DE 19801 (US)
(72) Inventor: CREAZZO, Joseph Anthony, Wilmington Delaware 19810 (US); ROBIN, Mark L., Middletown Delaware 19709 (US)
(74) Representative: Abitz & Partner
(86) International application number: PCT/US2017/030587
(87) International publication number: WO 2017/192550

(56) References cited:
- EP-A1- 2 706 086
- WO-A1-2016/007697
- WO-A2-2008/118627
- OKOLIEOCHA CHIMEZIE ET AL: "Microcellular to nanocellular polymer foams: Progress (2004-2015) and future directions - A review", EUROPEAN POLYMER JOURNAL, PERGAMON PRESS LTD. OXFORD, GB, vol. 73, 11 November 2015 (2015-11-11), pages 500 - 519, XP029305961, ISSN: 0014-3057, DOI: 10.1016/J.EURPOLYMJ.2015.11.001

## Description

### BACKGROUND INFORMATION

### Field of the Disclosure

This invention relates to the use of Z-HFO-1336mzz as blowing agent for thermoplastic polymer comprising polystyrene.

### Description of the Related Art

WO 2008/118627 A2 (assigned to Dow Global Technologies) discloses the discovery of blowing agents that have a zero ODP and GWP of less than 50 and solubility in alkenyl polymers, notably polystyrene, that enable these blowing agents comprising more than 50 wt% of the total blowing agent to produce quality foam. Table 2 discloses HFO-1336mzz (CF₃-CH=CH-CF₃) having a moderate solubility as compared to the Table 1 compounds. It is further disclosed that while the alkenes of Table 2 can comprise over 50 wt% of the blowing agent composition, additional blowing agent that is more soluble in the polymer is necessary to achieve quality foam (p. 15, I. 9-12). Quality foam is described as the foam having an average cell size of 0.02 to 5 mm, being close-celled, and having a density of 64 kg/m³ or less. Indicia of lack of quality are small average cell size, density greater than 64 kg/m³, high open cell content and blowholes (p. 2, I. 9-13). The quality foam is also essentially free of blowholes, which are described as being the size of multiple cell diameters and which can rupture at the foam surface to give an irregular surface (p. 2, I. 15-20). The blowholes that do not rupture can be called macrovoids, and the irregular surface caused by the rupturing blowholes is the opposite of a smooth surface (skin).

EP 2 706 086 A1 describes a method for producing foam panels comprising producing a polymer melt of styrene polymer or mixtures of styrene polymers, and introducing a propellant mixture made of 5-70 wt.% hydrofluorolefins and 95-30 wt.% co-propellant to form a foamable melt, and extruding the foamable melt.

WO 2016/007697 A1 discloses a composition and a method for making extruded polystyrene (XPS) foam including carbon dioxide as a major blowing agent.

### SUMMARY

The present invention involves the discovery of foaming conditions different from those disclosed for practice of the invention in WO 2008/118627 that enable Z-CF3-CH=CH-CF3 (Z-HFO-1336mzz, Z-1,1,1,4,4,4-hexafluoro-2-butene) to be useful in foaming thermoplastic polymer comprising polystyrene, with the foamed product of the present invention being free of the indicia of non-quality foam, i.e. having smooth skin and not having macrovoids and/or blowholes.

A process and the foam produced by said process are described, comprising extruding a molten composition comprising thermoplastic polymer comprising polystyrene and blowing agent comprising Z-HFO-1,1,1,4,4,4-hexafluoro-2-butene (Z-HFO-1336mzz) under the conditions
(a) said molten composition being formed by melt mixing at a temperature of at least 180°C,
(b) said melt mixing being carried out under a pressure of at least 1500 psi (103 Bar),
(c) said extruding being carried out at a temperature of at least 120°C, and
(d) said extruding being carried out under a pressure of at least 1000 psi (69 Bar),
said conditions being effective to produce closed cell, smooth skin, low density foamed thermoplastic polymer comprising polystyrene in the absence of any co-blowing agent.

According to the invention, the process comprises extruding a molten composition comprising thermoplastic polymer comprising polystyrene and blowing agent consisting essentially of Z-HFO-1,1,1,4,4,4-hexafluoro-2-butene (Z-HFO-1336mzz) under the conditions
(a) said molten composition being formed by melt mixing at a temperature of at least 180°C,
(b) said melt mixing being carried out under a pressure of at least 1500 psi (103 Bar),
(c) said extruding being carried out at a temperature of at least 120°C, and
(d) said extruding being carried out under a pressure of at least 1000 psi (69 Bar),
said conditions being effective to produce closed cell, smooth skin, low density foamed thermoplastic polymer comprising polystyrene in the absence of any co-blowing agent.

The smooth skin indicates the absence of macrovoids and blowholes. Blowholes are macrovoids that have burst through the skin surface. The closed cells are uniform in size and have an average cell size of 0.02 to 5 mm, indicating the absence of internal macrovoids. The low density is preferably no greater than 48 kg/m³. These results are obtained by using the Z-HFO-1336mzz as the sole blowing agent in the molten composition.

The thermoplastic polymer comprising polystyrene is preferably high in molecular weight as indicated by their exhibiting a melt flow rate (sometimes called MFR or MFI) of no greater than 25 g/10 min as determined in accordance with the procedure of ASTM D 1238 at 200°C using a 5 kg weight on the molten polymer.

The combination of this preferred high molecular weight and the combination of conditions (a)-(d) enable the Z-HFO-1336mzz by itself as the sole blowing agent to produce the above-described foamed product even when the molten composition is free of any co-blowing agent.

In the described process, a co-blowing agent can be present in the molten composition in a minor amount relative to the amount of Z-HFO-1336mzz blowing agent present in the molten composition to contribute beneficially to the density and/or closed cell size of the foamed product. When co-blowing agent is present, the above-described conditions (a)-(d) are followed so that the extrusion process is still one in which above-described foamed product would be obtained, even when the density of the foamed product is no greater than 48 kg/m³, using Z-HFO-1336mzz as the sole blowing agent. The same is true using the preferred molecular weight of the thermoplastic polymer comprising polystyrene. In other words, the conditions of operation (a)-(d) when co-blowing agent is present are such that the foam product described above would be obtained even if co-blowing agent were not present. The presence of co-blowing agent is unnecessary to obtain this foamed product. According to this embodiment, the amount of Z-HFO-1336mzz is increased to replace the amount of co-blowing agent, whereby the total amount of blowing agent obtaining the foamed product is 100 wt% Z-HFO-1336mzz.

A process is hence described comprising extruding a molten compositior comprising thermoplastic polymer comprising polystyrene and blowing agent comprising Z-HFO-1336mzz (Z-1,1,1,4,4,4-hexafluoro-2-butene) and co-blowing agent, under the conditions
(a) said composition being formed by melt mixing at a temperature of at least 180°C,
(b) said melt mixing being carried out under a pressure of at least 1500 psi (103 Bar),
(c) said extruding being carried out at a temperature of at least 120°C, and
(d) said extruding being carried out under a pressure of at least 1000 psi (69 Bar), and
obtaining as a result thereof a closed cell, smooth skin, low density foamed thermoplastic polymer comprising polystyrene, said co-blowing agent being unnecessary to said Z-HFO-1336mzz (E-1,1,1,4,4,4-hexafluoro-2-butene) obtaining said closed cell, smooth skin, low density, preferably no greater than 48 kg/m³, foamed thermoplastic polymer comprising polystyrene under said conditions. The Z-HFO-1336mzz obtains this result by itself, i.e. in the absence of the co-blowing agent.

### DETAILED DESCRIPTION

The thermoplastic polymer being foamed according to the present invention comprises polystyrene.

The polystyrene can be styrene homopolymer or can contain copolymerized monomer other than styrene, i.e. polystyrene copolymer. The thermoplastic polymer can also be a blend of polystyrene with other thermoplastic polymer. The other thermoplastic polymer can also be a copolymer of styrene with monomer other than styrene. A preferred monomer other than styrene is acrylonitrile.

Whether the thermoplastic polymer being foamed is polystyrene or blends of polystyrene with other thermoplastic polymer, styrene is preferably the dominant polymerized monomer (unit) in the thermoplastic polymer being foamed. More preferably, the polymerized units of styrene constitute at least 70 mol % or at least 80 mol% or at least 90 mol% or at least 100 mol% of the polymerized monomer units making up the thermoplastic polymer being foamed.

When the thermoplastic polymer contains styrene copolymer, the amount of other monomer copolymerized with the styrene, is such that the styrene content of the copolymer is at least 60 mol% of the copolymer, preferably at least 70 mol%, or at least 80 mol% or at least 90 mol% of the copolymer, based on the total mols (100%) making up the copolymer. This applies whether the styrene copolymer is the only styrene-containing polymer in the thermoplastic polymer or is a blend with other thermoplastic polymer, such as styrene homopolymer or other styrene copolymer.

Preferably, the thermoplastic polymer being foamed is entirely polystyrene, notably the styrene homopolymer. When the thermoplastic polymer being foamed is a blend of polystyrene and other thermoplastic polymer as described above, the polystyrene component of this blend is preferably styrene homopolymer constituting at least 80 wt% of the combined weight of polystyrene and other thermoplastic polymer.

The molecular weight of the thermoplastic polymer comprising polystyrene being foamed is sufficiently high to provide the strength necessary for the requirements of the foam application. The strength requirement determines the minimum density of the foamed product. The high molecular weight of the thermoplastic polymer comprising polystyrene also contributes to the strength of the foamed product. An indicator of molecular weight is the rate at which the molten polymer flows through a defined orifice under a defined load. The lower the flow, the higher the molecular weight. Measurement of the melt flow rate is determined in accordance with ASTM D 1238 at 200°C and using a 5 kg weight on the molten polymer. The weight of molten polymer flowing through the orifice in a defined amount of time, enables the melt flow rate to be reported in g/10 min. Preferably the melt flow rate of the thermoplastic polymer comprising polystyrene is no greater than 20 g/10 min, more preferably no greater than 15 g/10 min, and most preferably, no greater than 10 g/10 min. Surprisingly the higher the molecular weight (lower the melt flow rate), the better the foaming result, especially with respect to the attainability of low density foamed products, while still achieving smooth skin on the foamed product. Preferably the minimum melt flow rate for all the melt flow rates disclose herein is at least 1 g/10 min., whereby the melt flow rate ranges disclosed herein are 1 to 25, 1 to 20, 1 to15, and 1 to10, all values being g/10 min. These molecular weights apply to the thermoplastic polymer comprising polystyrene in the molten composition whether the Z-HFO-1336mzz is the sole blowing agent present in the composition or whether co-blowing agent is also present.

The references to thermoplastic polymer comprising polystyrene also apply to polystyrene by itself. Thus, for example, the disclosure of thermoplastic polymer comprising polystyrene in the preceding paragraph can be replaced by the disclosure polystyrene.

Further described herein is a foam product, comprising: a polymer matrix comprising a thermoplastic polymer selected from the group consisting of polystyrene, polystyrene copolymers, and blends of polystyrene with other thermoplastic polymers, defining a plurality of cells having an average cell size of from 0.02 to 5 mm, and a blowing agent consisting essentially of Z-HFO-1336mzz (Z-1,1,1,4,4,4-hexafluoro-2-butene), having a density of less than 65 kg/m², wherein the thermoplastic polymer has a melt flow rate of less than 25 g/ 10 min.

The molten composition being foamed can contain additives other than the polymer being foamed and the Z-HFO-1336mzz blowing agent, such as co-blowing agent, nucleating agent, flame retardant, cell stabilizer agent, surfactant, preservative colorant, antioxidant, reinforcing agent, filler, antistatic agent, IR attenuating agent, extrusion aid, plasticizer, viscosity modifier, and other known additives, all in the amount to obtain the effect desired. The present description is not limited to any particular additive, except as may be specified in any claim appended hereto.

To mention a few of these additives, the co-blowing agent, is preferably one having negligible ODP and low GWP, e.g. no greater than 150. If a co-blowing agent is used it may be selected from the group consisting of HFC-152a, CO₂, DME, HFO-1234ze(E), HFO-1234ze(Z), HCFO-1233zd(E), HCFO-1233zd(Z), HCFO-1224yd(E), HCFO-1224yd(Z) and HFO-1234yf.

If co-blowing agent were used, the Z-HFO-1336mzz would constitute the major proportion of the total amount of blowing agent. Thus, the Z-HFO-1336mzz would constitute at least 60 wt% of the total blowing agent, preferably at least 70 wt%, with the co-blowing agent being present in the amounts of 40 wt% and 30 wt%, respectively. If co-blowing agent were used, its minimum amount will be as little as 5 wt% or 10 wt%, whereby the Z-HFO-1336mzz will be present in the 95 wt% and 90 wt% amounts, respectively. Based on the combined weights of blowing agent totaling 100 wt%, the preferred blowing agent composition when co-blowing agent is present is 90 to 75 wt% Z-HFO-1336mzz and 10 to 25 wt% of co-blowing agent.

Preferred examples of nucleating agent are talc, graphite and magnesium silicate.

Examples of preferred flame retardants include tetrabromo-bis phenol A and polymeric flame retardants.

The molten composition is in effect the foamable composition. The amount of blowing agent in the molten composition will depend on the amount of additives other than blowing agent and the density desired in the foamed product. Generally, the amount of blowing agent, whether Z-HFO-1336mzz as the sole blowing agent or the Z-HFO-1336mzz blowing agent plus co-blowing agent, will be 5 to 25 wt%, based on the weight of the molten composition.

The process of the present invention is carried out using an extruder to form the molten composition and to extrude it to form the foamed product. The steps (a)-(d) are practiced in and using an extruder. The thermoplastic polymer comprising polystyrene forms the feed to the extruder. The blowing agent(s) is (are) preferably fed into the extruder at a location intermediate to the feed and extrusion ends of the extruder, typically into the molten composition that is created as the extrusion screw advances the feeds to the extruder along its length. The other additives to the molten composition are added where convenient and as may be dictated by the state of the additive. For example, solid additives can be conveniently be added to the feed end of the extruder, possibly as a mixture with the polymer feed in particulate form to the extruder. The molten composition within the extruder is extruded through a die, thereby allowing the foamable composition to expand into a foamed product. The foamed product, which can be in such forms as sheet, plank, rod, or tube, is then cooled.

The present invention resides in certain conditions, unique to extrusion forming of thermoplastic polymers that include polystyrene, under which the extruder is operated.

In the region within the extruder where the composition is melted to form the molten composition, this melting occurring by the input of heat and the heat developed in the mixing process forming the melt, this is considered the melt mixing region. The preferred temperature is at least 185°C, more preferably at least 190°C or at least 200°C or at least 210°C. The preferred maximum temperature for all the melt mixing temperatures disclosed herein is 230°C. The melt mixing temperatures disclosed herein are the temperatures of the melt in the mixing zone at the time of mixing. The preferred pressure under which the melt mixing is carried out is at least 3000 psi (207 Bar), more preferably at least 3500 psi (241 Bar), more preferably at least 4000 psi (276 Bar). The preferred maximum value for all the minimum pressures disclosed under which the melt mixing is carried out is no greater than 5000 psi (345 Bar). The pressures disclosed herein are gauge pressures.

In the region within the extruder where the molten composition is extruded, the molten composition is cooled so that the temperature at which the extrusion is carried out is preferably at least 125°C, more preferably at least 130°C. The maximum value for all the minimum extrusion temperatures disclosed herein is preferably no greater than 140°C. The extrusion temperatures disclosed herein are the temperature of the melt at the time of extrusion.

The extrusion is preferably carried out with a pressure of at least 1500 psi (103 Bar), more preferably at least 1600 psi (110 Bar). The maximum value for the minimum extrusion pressures disclosed herein is preferably no greater than 2000 psi (138 Bar). The extrusion pressure is the pressure inside the extrusion die.

The disclosures of multiple ranges for melt flow rate, temperature and pressure above can be used in any combination in the practice of the present invention to obtain the particular foamed structure desired. For example, melt mixing pressures of 3000 to 5000 psi (207 to 345 bar) are preferred for achieving low foam densities of the foamed product, and this temperature range can be used with any of the melt mixing and extrusion temperature ranges to form any of the smooth-skin, closed cell foam product densities disclosed herein. The same is true for the melt extrusion pressure range of 1500 to 2000 psi (103 to 138 Bar) pressure range together with the 3000 to 5000 psi (207 to 345 bar) pressure range for melt mixing. Most preferably, the two preferred pressure ranges, for melt mixing (207 to 345 bar) and extrusion (103 to 138 bar) are used together. The melt flow rates for the polymer being foamed of no greater than 25, 20, 15, and 10, and as little as at least 1, all values being in g/10 min, can be used with any of these combinations of pressure and temperatures, depending on the foamed product result desired.

The conditions (a)-(d) can be used in any combination with any of the polymer melt flow rates and compositions and blowing agent compositions disclosed above.

Preferably the thermoplastic polymer comprising polystyrene and polystyrene itself exhibits the following foamed product attributes:
Closed cells - at least 80%, preferably at least 90% and most preferably at least 95%, and having an average cell size of 0.02 to 5 mm,
Density no greater than 40 g/m³ and more preferably no greater than 35 kg/m³ or 30 kg/m³, and
Smooth skin as described above.

The minimum required strength (compressive) of the foamed product will dictate that the density be at least 16 kg/m³.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus.

The transitional phrase "consisting of" excludes any element, step, or ingredient not specified. If in the claim, such would close the claim to the inclusion of materials other than those recited except for impurities ordinarily associated therewith. When the phrase "consists of" appears in a clause of the body of a claim, rather than immediately following the preamble, it limits only the element set forth in that clause; other elements are not excluded from the claim as a whole. The transitional phrase "consisting essentially of" is used to define a composition, method that includes materials, steps, features, components, or elements, in addition to those literally disclosed provided that these additional included materials, steps, features, components, or elements do not materially affect the basic and novel characteristic(s) of the claimed invention, especially the mode of action to achieve the desired result of any of the processes of the present invention. The term 'consisting essentially of occupies a middle ground between "comprising" and 'consisting of.

Where applicants have defined an invention or a portion thereof with an open-ended term such as "comprising," it should be readily understood that (unless otherwise stated) the description should be interpreted to also include such an invention using the terms "consisting essentially of" or "consisting of."

### EXAMPLE 1:

### Polystyrene Foam Extrusion with Slit Die using Neat Z-HFO-1336mzz as the Blowing Agent

This example demonstrates the use of Z-HFO-1336mzz as a blowing agent to produce polystyrene foam insulation exhibiting uniform closed cells, smooth skin, and low density. Macrovoids and blowholes are not present in the foam insulation. The polystyrene used in this example is styrene homopolymer available as Nova 1600 polystyrene having a melt flow rate of 6 g/10 min. A nucleating agent (nucleator), namely magnesium silicate, is present along with the polystyrene and blowing agent in the molten composition formed within the extruder.

For this example, a 30 mm twin screw laboratory extruder was used with 8 individually controlled, electrically heated zones and water cooled barrels. Extrusion used a slit die.

**Table 1 - Extruder Operating Parameters and Foam Density Achieved**

| | |
|---|---|
| Extruder speed (rpm) | 101 |
| Extrusion rate (Ib/hr) | 7 (3.2 kg/hr) |
| Blowing agent rate (Ib/hr) | 1.8 (0.8 kg/hr) |
| Blowing agent concentration (wt %) | 20.5 |
| Nucleator concentration (wt %) | 0.5 |
| Melt mixing temperature (°C) | 200 |
| Melt mixing pressure (psi) | 3000 (207 Bar) |
| Extrusion temperature (°C) | 131 |
| Extrusion pressure (psi) | 1500 (103 Bar) |
| Foam density (kg/m³) | 45.3 |
| Cell size range (µM) | 20 - 140 |

### EXAMPLE 2:

### Polystyrene Foam Extrusion with Round Die using Neat Z-HFO-1336mzz as the Blowing Agent

This example demonstrates the use of Z-HFO-1336mzz as a blowing agent to produce polystyrene foam insulation exhibiting uniform closed cells, smooth skin, and low density. Macrovoids and blowholes are not present in the foam insulation. The polystyrene used in this example is styrene homopolymer available as Nova 1600 polystyrene having a melt flow rate of 6 g/10 min. A nucleating agent (nucleator), namely magnesium silicate, is present along with the polystyrene and blowing agent in the molten composition formed within the extruder

For this example, a 30 mm twin screw laboratory extruder was used with 8 individually controlled, electrically heated zones and water cooled barrels. Extrusion used a round die.

**Table 2 - Extruder Operating Parameters and Foam Density Achieved**

| | |
|---|---|
| Extruder speed (rpm) | 100 |
| Extrusion rate (Ib/hr) | 7 (3.2 kg/hr) |
| Blowing agent rate (lb/hr) | 1.44 (0.65 kg/hr) |
| Blowing agent concentration (wt %) | 17.1 |
| Nucleator concentration (wt %) | 0.5 |
| Melt mixing temperature (°C) | 209 |
| Melt mixing pressure (psi) | 1400 (96.5 Bar) |
| Extrusion temperature (°C) | 115 |
| Extrusion pressure (psi) | 1245 (85.8 Bar) |
| Foam density (kg/m³) | 46.8 |
| Cell size range (µM) | 50-500 |

### COMPARATIVE EXAMPLE 3:

### Polystyrene Foam Extrusion using a 77123 wt% Z-HFO-1336mzz/HFC-152a Blend as the Blowing Agent

This example demonstrates the use of Z-HFO-1336mzz/HFC-152a blend containing 77 wt% Z-HFO-1336mzz as the blowing agent to produce polystyrene foam insulation exhibiting uniform closed cells, smooth skin, and low density. Macrovoids and blowholes are not present in the foam insulation. The polystyrene used in this example is styrene homopolymer available by Total Petrochemicals as PS 535B having a melt flow rate of 4 g/10 min. A nucleating agent (nucleator), namely talc, is present along with the polystyrene and blowing agent in the molten composition formed within the extruder.

For this example, a 50 mm twin screw laboratory extruder was used with 9 individually controlled, electrically heated zones. The first four zones of the extruder were used to heat and soften the polymer. The remaining barrel sections, from the blowing agent injection location to the end of the extruder, were set at selected lower temperatures. An annular die with a 3 mm opening was used in extruding foamed rod specimens.

**Table 3 - Extruder Operating Parameters and Foam Density Achieved**

| | |
|---|---|
| Extruder speed (rpm) | 40 |
| Polystyrene flow rate (kg/hr) | 20 |
| Nucleator flow rate (kg/hr) | 0.07 |
| Nucleator proportion in the solids (polystyrene+nucleator) feed (wt%) | 0.35 |
| Blowing agent flow rate (kg/hr) | 1.99 |
| Blowing agent proportion in foamable composition (polystyrene+nucleator+blowing agent) (wt%) | 9.06 |
| Extrusion temperature (°C) | 135 |
| Extrusion pressure (psi) | 1320 (91.0 bar) |
| Foam density (kg/m³) | 46 |

## Claims

1. Process comprising extruding a molten composition comprising thermoplastic polymer comprising polystyrene and blowing agent consisting essentially of cis-1,1,1,4,4,4-hexafluoro-2-butene (Z-HFO-1336mzz) under the conditions
(a) said molten composition being formed by melt mixing at a temperature of at least 180°C,
(b) said melt mixing being carried out under a pressure of at least 1500 psi (103 Bar),
(c) said extruding being carried out at a temperature of at least 120°C, and
(d) said extruding being carried out under a pressure of at least 1000 psi (69 Bar),
said conditions being effective to produce closed cell, smooth skin, low density foamed thermoplastic polymer comprising polystyrene in the absence of any co-blowing agent.

2. Process of claim 1 wherein said low density is no greater than 48 kg/m³.

3. Process of claim 1 wherein said melt mixing temperature is at least 185°C or
wherein said melt mixing pressure is at least 3000 psi (207 Bar).

4. Process of claim 1 wherein said extruding is at a temperature of at 125°C or
wherein said extruding is under a pressure of at least 1500 psi (103 Bar).

5. Process of claim 1 herein said thermoplastic polymer comprising polystyrene has a melt flow index of no greater than 25 g/10 sec as determined in accordance with the procedure of ASTM D 1238 at 200°C using a 5 kg weight on the molten polymer.

6. Process of claim 1 wherein said thermoplastic polymer comprising polystyrene is polystyrene.

7. Process of claim 1 wherein said foamed thermoplastic polymer comprising polystyrene has at least 80% closed cells.

8. The process of claim 1 wherein said molten composition comprises nucleating agent, preferably wherein said nucleating agent comprises graphite.

9. The process of claim 1, wherein said molten composition further comprises a flame retardant, preferably wherein said flame retardant comprises a polymeric flame retardant.

## Patentansprüche

1. Verfahren umfassend Extrudieren einer geschmolzenen Zusammensetzung, die thermoplastisches Polymer umfasst, das Polystyrol und Treibmittel umfasst, das im Wesentlichen aus cis-1,1,1,4,4,4-Hexafluor-2-buten (Z-HFO-1336mzz) besteht, unter den folgenden Bedingungen:
(a) dass die geschmolzene Zusammensetzung durch Schmelzmischen bei einer Temperatur von mindestens 180 °C gebildet wird,
(b) dass das Schmelzmischen unter einem Druck von mindestens 1 500 psi (103 bar) ausgeführt wird,
(c) dass das Extrudieren bei einer Temperatur von mindestens 120 °C ausgeführt wird und
(d) dass das Extrudieren unter einem Druck von mindestens 1 000 psi (69 bar) ausgeführt wird,
wobei die Bedingungen wirksam sind, ein geschlossenzelliges, glatthäutiges, geschäumtes thermoplastisches Polymer niedriger Dichte herzustellen, das Polystyrol in Abwesenheit irgendeines Co-Treibmittels umfasst.

2. Verfahren nach Anspruch 1, wobei die niedrige Dichte nicht höher als 48 kg/m³ ist.

3. Verfahren nach Anspruch 1, wobei die Schmelzmischtemperatur mindestens 185 °C beträgt oder
wobei der Schmelzmischdruck mindestens 3 000 psi (207 bar) beträgt.

4. Verfahren nach Anspruch 1, wobei das Extrudieren bei einer Temperatur von 125 °C erfolgt oder wobei das Extrudieren unter einem Druck von mindestens 1 500 psi (103 bar) erfolgt.

5. Verfahren nach Anspruch 1, wobei das thermoplastische Polymer, das Polystyrol umfasst, einen Schmelzflussindex von nicht mehr als 25 g/10 sec, wie der Vorgehensweise von ASTM D 1238 bei 200 °C unter Anwendung eines Gewichts von 5 kg auf das geschmolzene Polymer entsprechend bestimmt, aufweist.

6. Verfahren nach Anspruch 1, wobei das thermoplastische Polymer, das Polystyrol umfasst, Polystyrol ist.

7. Verfahren nach Anspruch 1, wobei das geschäumte thermoplastische Polymer, das Polystyrol umfasst, mindestens 80 % geschlossene Zellen aufweist.

8. Verfahren nach Anspruch 1, wobei die geschmolzene Zusammensetzung ein Keimbildungsmittel umfasst, wobei das Keimbildungsmittel bevorzugt Graphit umfasst.

9. Verfahren nach Anspruch 1, wobei die geschmolzene Zusammensetzung ferner ein Flammschutzmittel umfasst, wobei das Flammschutzmittel bevorzugt ein polymeres Flammschutzmittel umfasst.

## Revendications

1. Procédé comprenant l'extrusion d'une composition fondue comprenant un polymère thermoplastique comprenant du polystyrène et un agent d'expansion essentiellement constitué de cis-1,1,1,4,4,4-hexafluoro-2-butène (Z-HFO-1336mzz) sous les conditions suivantes :
(a) ladite composition fondue est formée par mélange à l'état fondu à une température d'au moins 180 °C,
(b) ledit mélange à l'état fondu est réalisé sous une pression d'au moins 1 500 lb/po² (103 bars),
(c) ladite extrusion est réalisée à une température d'au moins 120 °C, et
(d) ladite extrusion est réalisée sous une pression d'au moins 1 000 lb/po² (69 bars),
lesdites conditions étant efficaces pour produire un polymère thermoplastique expansé de faible densité, à alvéoles fermées, à membrane lisse comprenant du polystyrène en l'absence de quelconque co-agent d'expansion.

2. Procédé selon la revendication 1, dans lequel ladite faible densité n'est pas supérieure à 48 kg/m³.

3. Procédé selon la revendication 1, dans lequel ladite température de mélange à l'état fondu est d'au moins 185 °C ou
dans lequel ladite pression de mélange à l'état fondu est d'au moins 3 000 lb/po² (207 bars).

4. Procédé selon la revendication 1, dans lequel ladite extrusion s'effectue à une température de 125 °C ou dans lequel ladite extrusion s'effectue sous une pression d'au moins 1 500 lb/po² (103 bars).

5. Procédé selon la revendication 1, dans lequel ledit polymère thermoplastique comprenant du polystyrène présente un indice d'écoulement à l'état fondu non supérieur à 25 g/10 s tel que déterminé selon la procédure de la norme ASTM D 1238 à 200°C en utilisant un poids de 5 kg sur le polymère fondu.

6. Procédé selon la revendication 1, dans lequel ledit polymère thermoplastique comprenant du polystyrène est le polystyrène.

7. Procédé selon la revendication 1, dans lequel ledit polymère thermoplastique expansé comprenant du polystyrène présente au moins 80 % d'alvéoles fermées.

8. Procédé selon la revendication 1, dans lequel ladite composition fondue comprend un agent de nucléation, préférablement, dans lequel ledit agent de nucléation comprend du graphite.

9. Procédé selon la revendication 1, dans lequel ladite composition fondue comprend en outre un agent ignifuge, préférablement, dans lequel ledit agent ignifuge comprend un agent ignifuge polymère.
